# EUROPEAN PATENT APPLICATION

(11) **EP 3 396 635 A2**
(43) Date of publication of application: **31.10.2018**
(21) Application number: 18168938.1
(22) Date of filing: 24.04.2018
(51) Int. Cl.: G06T 17/00, G06T 15/50, G06T 7/55, H04N 19/597

(54) **A METHOD AND TECHNICAL EQUIPMENT FOR ENCODING MEDIA CONTENT**

(30) Priority: 24.04.2017 FI 20175368
(71) Applicant: Nokia Technologies Oy, 02610 Espoo (FI)
(72) Inventor: KERÄNEN, Jaakko, 02940 Espoo (FI); ROIMELA, Kimmo, 33710 Tampere (FI); PYSTYNEN, Johannes, 33870 Tampere (FI)
(74) Representative: Nokia EPO representatives

(57) **Abstract**

The invention relates to a method and technical equipment. The method comprises receiving media content comprising images and depth information; generating a sparse voxel octree from the received images and depth information; projecting the received image colors to each voxel of the generated sparse voxel octree based on visibility; converting the received images into a set of radiance samples for each voxel of the generated sparse voxel octree; processing the radiance samples by performing one of the following: fitting the radiance samples to a parametric color model to generate estimated radiance samples for a current viewing direction; or analyzing the radiance samples with the content of the generated sparse voxel octree to separate an actual surface color and reflectance properties from a reflected lighting.

## Description

### Technical Field

The present solution generally relates to video encoding. In particular, the solution relates to volumetric encoding and virtual reality (VR).

### Background

Since the beginning of photography and cinematography, the most common type of image and video content has been captured and displayed as a two-dimensional (2D) rectangular scene. The main reason of this is that cameras are mainly directional, i.e., they capture only a limited angular field of view (the field of view towards which they are directed).

More recently, new image and video capture devices are available. These devices are able to capture visual and audio content all around them, i.e. they can capture the whole angular field of view, sometimes referred to as 360 degrees field of view. More precisely, they can capture a spherical field of view (i.e., 360 degrees in all axes). Furthermore, new types of output technologies have been invented and produced, such as head-mounted displays. These devices allow a person to see visual content all around him/her, giving a feeling of being "immersed" into the scene captured by the 360 degrees camera. The new capture and display paradigm, where the field of view is spherical, is commonly referred to as virtual reality (VR) and is believed to be the common way people will experience media content in the future.

The perceived appearance of physical surfaces depends on both incident illumination and viewing direction. For instance, the specular highlights on a shiny object will appear to shift when the viewer's position changes in relation to the object. Image and video capture devices are only able to record a subset of all the possible viewing directions, which means that when viewing such recorded material in VR, one has to synthesize information that is not present in the recording.

### Summary

Now there has been invented an improved method and technical equipment implementing the method. Various aspects of the invention include a method, an apparatus and a computer readable medium comprising a computer program stored therein, which are characterized by what is stated in the independent claims. Various embodiments of the invention are disclosed in the dependent claims.

According to a first aspect, there is provided a method comprising receiving media content comprising images and depth information; generating a sparse voxel octree from the received images and depth information; projecting the received image colors to each voxel of the generated sparse voxel octree based on visibility; converting the received images into a set of radiance samples for each voxel of the generated sparse voxel octree; processing the radiance samples by performing one of the following: fitting the radiance samples to a parametric color model to generate estimated radiance samples for a current viewing direction; or analyzing the radiance samples with the content of the generated sparse voxel octree to separate an actual surface color and reflectance properties from a reflected lighting.

According to a second aspect, there is provided an apparatus comprising at least one processor, memory including computer program code, the memory and the computer program code configured to, with the at least one processor, cause the apparatus to perform at least the following: receive media content comprising images and depth information; generate a sparse voxel octree from the received images and depth information; project the received image colors to each voxel of the generated sparse voxel octree based on visibility; result a set of radiance samples for each voxel of the generated sparse voxel octree; process the radiance samples by performing one of the following: fit the radiance samples to a parametric color model to generate estimated radiance samples for a current viewing direction; or analyze the radiance samples with the content of the generated sparse voxel octree to separate an actual surface color and reflectance properties from a reflected lighting.

According to a third aspect, there is provided a computer program product embodied on a non-transitory computer readable medium, comprising computer program code configured to, when executed on at least one processor, cause an apparatus or a system to: receive media content comprising images and depth information; generate a sparse voxel octree from the received images and depth information; project the received image colors to each voxel of the generated sparse voxel octree based on visibility; result a set of radiance samples for each voxel of the generated sparse voxel octree; process the radiance samples by performing one of the following: fit the radiance samples to a parametric color model to generate estimated radiance samples for a current viewing direction; or analyze the radiance samples with the content of the generated sparse voxel octree to separate an actual surface color and reflectance properties from a reflected lighting.

According to an embodiment, the media content is received from a multicamera device.

According to an embodiment, the radiance samples are combined into a smaller representation to enable reproduction of an appearance of the voxel from a viewing direction.

According to an embodiment, the fitting the radiance samples to a parametric color model comprises optimizing a multi-lobe radiance model for best fit to radiance samples in each voxel of the generated sparse voxel tree.

According to an embodiment, the analyzing the radiance samples comprises raycasting reflections per voxel in the generated sparse voxel octree and optimizing a set of reflectance properties to best match the reflected colors over a region of similarly classified voxels.

### Description of the Drawings

In the following, various embodiments of the invention will be described in more detail with reference to the appended drawings, in which
- Fig. 1: shows a system and apparatuses for stereo viewing;
- Fig. 2a: shows a camera device for stereo viewing;
- Fig. 2b: shows a head-mounted display for stereo viewing;
- Fig. 3: shows a camera according to an embodiment;
- Fig. 4a, 4b: show examples of a multicamera capturing device;
- Fig. 5a: shows an encoder according to an embodiment;
- Fig. 5b: shows a decoder according to an embodiment;
- Fig. 6: shows an example of processing steps of manipulating volumetric video data;
- Fig. 7: shows an example of a volumetric video pipeline;
- Fig. 8: is a flowchart illustrating a method for parametric color modeling;
- Fig. 9: is a flowchart illustrating a method for dynamic reflection estimation;
- Fig. 10: is a flowchart illustrating a method according to an embodiment; and
- Fig. 11: illustrates an apparatus according to an embodiment.

### Description of Example Embodiments

The present embodiments relate to real-time computer graphics and virtual reality (VR).

Volumetric video may be captured using one or more 2D or multi-view stereo cameras with or without additional depth sensors. Volumetric video is to virtual reality what traditional video is to 2D/3D displays. When multiple cameras are in use, the captured footage is synchronized so that the cameras provide different viewpoints to the same world. In contrast to traditional 2D/3D video, volumetric video describes a 3D model of the world where the viewer is free to move and observe different parts of the world.

The present embodiments are discussed in relation to media content captured with one or more multicamera devices. A multicamera device comprises two or more cameras, wherein the two or more cameras may be arranged in pairs in said multicamera device. Each said camera has a respective field of view, and each said field of view covers the view direction of the multicamera device.

The multicamera device may comprise cameras at locations corresponding to at least some of the eye positions of a human head at normal anatomical posture, eye positions of the human head at maximum flexion anatomical posture, eye positions of the human head at maximum extension anatomical postures, and/or eye positions of the human head at maximum left and right rotation anatomical postures. The multicamera device may comprise at least three cameras, the cameras being disposed such that their optical axes in the direction of the respective camera's field of view fall within a hemispheric field of view, the multicamera device comprising no cameras having their optical axes outside the hemispheric field of view, and the multicamera device having a total field of view covering a full sphere.

The multicamera device described here may have cameras with wide-angle lenses. The multicamera device may be suitable for creating stereo viewing image data and/or multiview video, comprising a plurality of video sequences for the plurality of cameras. The multicamera may be such that any pair of cameras of the at least two cameras has a parallax corresponding to parallax (disparity) of human eyes for creating a stereo image. At least two cameras may have overlapping fields of view such that an overlap region for which every part is captured by said at least two cameras is defined, and such overlap area can be used in forming the image for stereo viewing.

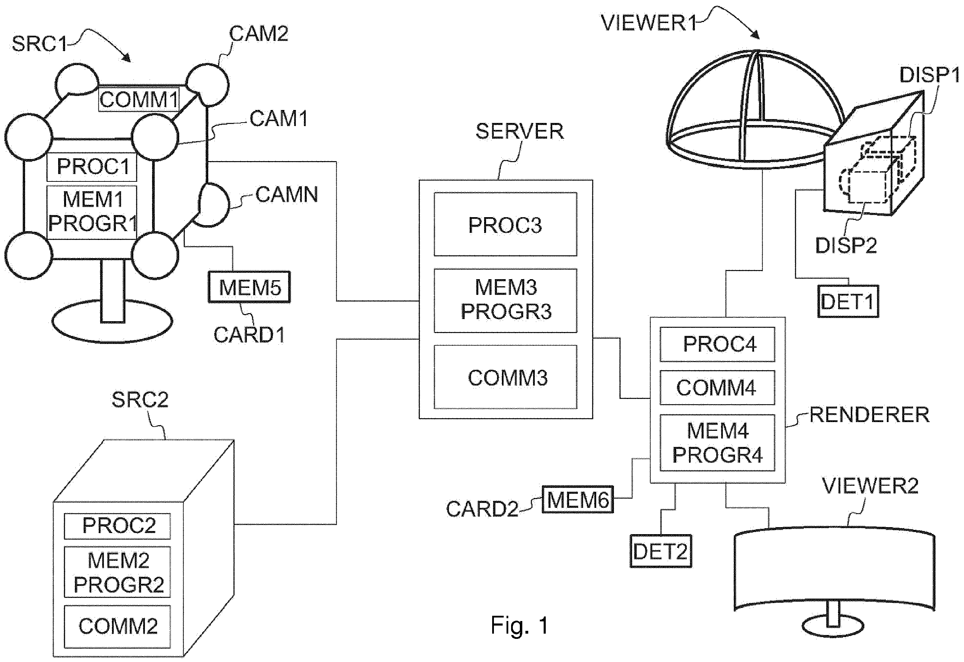

Fig. 1 shows a system and apparatuses for stereo viewing, that is, for 3D video and 3D audio digital capture and playback. The task of the system is that of capturing sufficient visual and auditory information from a specific location such that a convincing reproduction of the experience, or presence, of being in that location can be achieved by one or more viewers physically located in different locations and optionally at a time later in the future. Such reproduction requires more information that can be captured by a single camera or microphone, in order that a viewer can determine the distance and location of objects within the scene using their eyes and their ears. To create a pair of images with disparity, two camera sources are used. In a similar manner, for the human auditory system to be able to sense the direction of sound, at least two microphones are used (the commonly known stereo sound is created by recording two audio channels). The human auditory system can detect the cues, e.g. in timing difference of the audio signals to detect the direction of sound.

The system of Fig. 1 may consist of three main parts: image sources, a server and a rendering device. A video capture device SRC1 comprises multiple cameras CAM1, CAM2, ..., CAMN with overlapping field of view so that regions of the view around the video capture device is captured from at least two cameras. The device SRC1 may comprise multiple microphones to capture the timing and phase differences of audio originating from different directions. The device SRC1 may comprise a high resolution orientation sensor so that the orientation (direction of view) of the plurality of cameras can be detected and recorded. The device SRC1 comprises or is functionally connected to a computer processor PROC1 and memory MEM1, the memory comprising computer program PROGR1 code for controlling the video capture device. The image stream captured by the video capture device may be stored on a memory device MEM2 for use in another device, e.g. a viewer, and/or transmitted to a server using a communication interface COMM1. It needs to be understood that although an 8-camera-cubical setup is described here as part of the system, another multicamera (e.g. a stereo camera) device may be used instead as part of the system.

Alternatively or in addition to the video capture device SRC1 creating an image stream, or a plurality of such, one or more sources SRC2 of synthetic images may be present in the system. Such sources of synthetic images may use a computer model of a virtual world to compute the various image streams it transmits. For example, the source SRC2 may compute N video streams corresponding to N virtual cameras located at a virtual viewing position. When such a synthetic set of video streams is used for viewing, the viewer may see a three-dimensional virtual world. The device SRC2 comprises or is functionally connected to a computer processor PROC2 and memory MEM2, the memory comprising computer program PROGR2 code for controlling the synthetic sources device SRC2. The image stream captured by the device may be stored on a memory device MEM5 (e.g. memory card CARD1) for use in another device, e.g. a viewer, or transmitted to a server or the viewer using a communication interface COMM2. There may be a storage, processing and data stream serving network in addition to the capture device SRC1. For example, there may be a server SERVER or a plurality of servers storing the output from the capture device SRC1 or computation device SRC2. The device SERVER comprises or is functionally connected to a computer processor PROC3 and memory MEM3, the memory comprising computer program PROGR3 code for controlling the server. The device SERVER may be connected by a wired or wireless network connection, or both, to sources SRC1 and/or SRC2, as well as the viewer devices VIEWER1 and VIEWER2 over the communication interface COMM3.

For viewing the captured or created video content, there may be one or more viewer devices VIEWER1 and VIEWER2. These devices may have a rendering module and a display module, or these functionalities may be combined in a single device. The devices may comprise or be functionally connected to a computer processor PROC4 and memory MEM4, the memory comprising computer program PROG4 code for controlling the viewing devices. The viewer (playback) devices may consist of a data stream receiver for receiving a video data stream from a server and for decoding the video data stream. The data stream may be received over a network connection through communications interface COMM4, or from a memory device MEM6 like a memory card CARD2. The viewer devices may have a graphics processing unit for processing of the data to a suitable format for viewing. The viewer VIEWER1 comprises a high-resolution stereo-image head-mounted display for viewing the rendered stereo video sequence. The head-mounted display may have an orientation sensor DET1 and stereo audio headphones. According to an embodiment, the viewer VIEWER2 comprises a display enabled with 3D technology (for displaying stereo video), and the rendering device may have a head-orientation detector DET2 connected to it. Alternatively, the viewer VIEWER2 may comprise a 2D display, since the volumetric video rendering can be done in 2D by rendering the viewpoint from a single eye instead of a stereo eye pair. Any of the devices (SRC1, SRC2, SERVER, RENDERER, VIEWER1, VIEWER2) may be a computer or a portable computing device, or be connected to such. Such rendering devices may have computer program code for carrying out methods according to various examples described in this text.

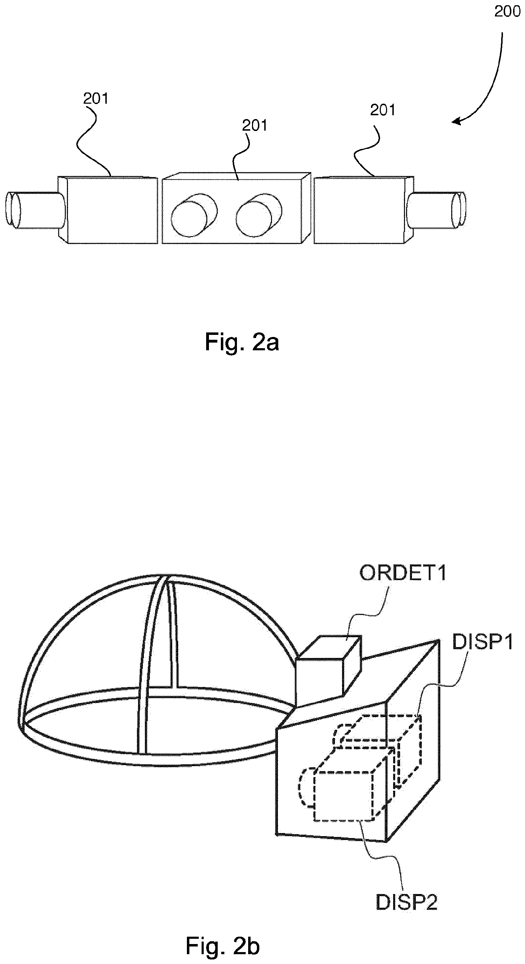

Fig. 2a shows a camera device 200 for stereo viewing. The camera comprises two or more cameras that are configured into camera pairs 201 for creating the left and right eye images, or that can be arranged to such pairs. The distances between cameras may correspond to the usual (or average) distance between the human eyes. The cameras may be arranged so that they have significant overlap in their field-of-view. For example, wide-angle lenses of 180-degrees or more may be used, and there may be 2, 3, 4, 5, 6, 7, 8, 9, 10, 12, 16, or 20 cameras. The cameras may be regularly or irregularly spaced to access the whole sphere of view, or they may cover only part of the whole sphere. For example, there may be three cameras arranged in a triangle and having different directions of view towards one side of the triangle such that all three cameras cover an overlap area in the middle of the directions of view. As another example, 8 cameras having wide-angle lenses and arranged regularly at the corners of a virtual cube and covering the whole sphere such that the whole or essentially whole sphere is covered at all directions by at least 3 or 4 cameras. In Fig. 2a three stereo camera pairs 201 are shown.

Multicamera devices with other types of camera layouts may be used. For example, a camera device with all cameras in one hemisphere may be used. The number of cameras may be e.g., 2, 3, 4, 6, 8, 12, or more. The cameras may be placed to create a central field of view where stereo images can be formed from image data of two or more cameras, and a peripheral (extreme) field of view where one camera covers the scene and only a normal non-stereo image can be formed.

Fig. 2b shows a head-mounted display (HMD) for stereo viewing. The head-mounted display comprises two screen sections or two screens DISP1 and DISP2 for displaying the left and right eye images. The displays are close to the eyes, and therefore lenses are used to make the images easily viewable and for spreading the images to cover as much as possible of the eyes' field of view. The device is attached to the head of the user so that it stays in place even when the user turns his head. The device may have an orientation detecting module ORDET1 for determining the head movements and direction of the head. The head-mounted display gives a three-dimensional (3D) perception of the recorded/streamed content to a user.

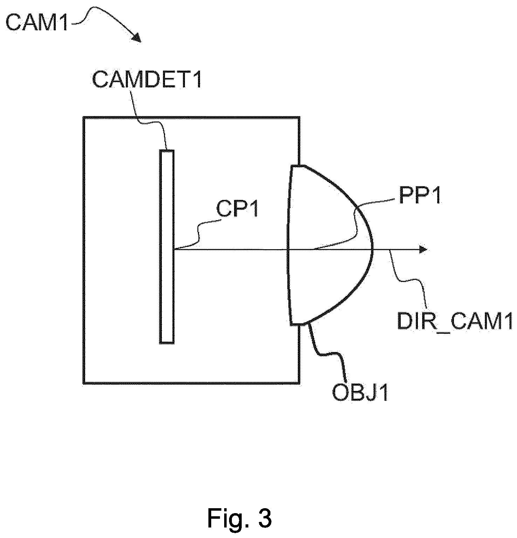

Fig. 3 illustrates a camera CAM1. The camera has a camera detector CAMDET1, comprising a plurality of sensor elements for sensing intensity of
the light hitting the sensor element. The camera has a lens OBJ1 (or a lens arrangement of a plurality of lenses), the lens being positioned so that the light hitting the sensor elements travels through the lens to the sensor elements. The camera detector CAMDET1 has a nominal center point CP1 that is a middle point of the plurality of sensor elements, for example for a rectangular sensor the crossing point of the diagonals. The lens has a nominal center point PP1, as well, lying for example on the axis of symmetry of the lens. The direction of orientation of the camera is defined by the line passing through the center point CP1 of the camera sensor and the center point PP1 of the lens. The direction of the camera is a vector along this line pointing in the direction from the camera sensor to the lens. The optical axis of the camera is understood to be this line CP1-PP1.

The system described above may function as follows. Time-synchronized video, audio and orientation data is first recorded with the capture device. This can consist of multiple concurrent video and audio streams as described above. These are then transmitted immediately or later to the storage and processing network for processing and conversion into a format suitable for subsequent delivery to playback devices. The conversion can involve post-processing steps to the audio and video data in order to improve the quality and/or reduce the quantity of the data while preserving the quality at a desired level. Finally, each playback device receives a stream of the data from the network, and renders it into a stereo viewing reproduction of the original location which can be experienced by a user with the head-mounted display and headphones.

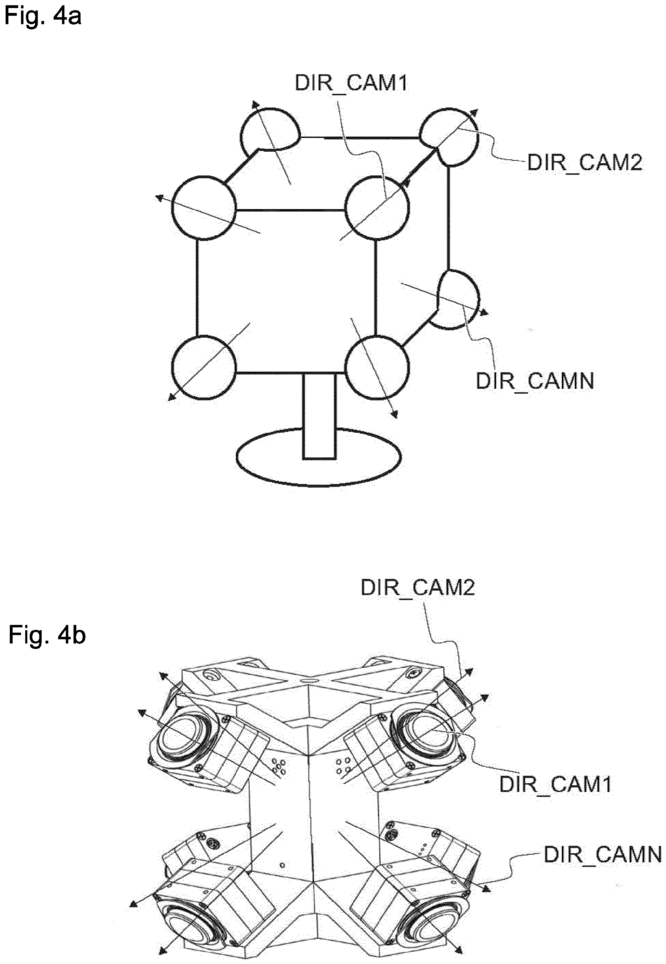

Figs. 4a and 4b show an example of a camera device for being used as a source for media content, such as images and/or video. To create a full 360 degree stereo panorama every direction of view needs to be photographed from two locations, one for the left eye and one for the right eye. In case of video panorama, these images need to be shot simultaneously to keep the eyes in sync with each other. As one camera cannot physically cover the whole 360 degree view, at least without being obscured by another camera, there need to be multiple cameras to form the whole 360 degree panorama. Additional cameras however increase the cost and size of the system and add more data streams to be processed. This problem becomes even more significant when mounting cameras on a sphere or platonic solid shaped arrangement to get more vertical field of view. However, even by arranging multiple camera pairs on for example a sphere or platonic solid such as octahedron or dodecahedron, the camera pairs will not achieve free angle parallax between the eye views. The parallax between eyes is fixed to the positions of the individual cameras in a pair, that is, in the perpendicular direction to the camera pair, no parallax can be achieved. This is problematic when the stereo content is viewed with a head mounted display that allows free rotation of the viewing angle around z-axis as well.

The requirement for multiple cameras covering every point around the capture device twice would require a very large number of cameras in the capture device. In this technique lenses are used with a field of view of 180 degree (hemisphere) or greater, and the cameras are arranged with a carefully selected arrangement around the capture device. Such an arrangement is shown in Fig. 4a, where the cameras have been positioned at the corners of a virtual cube, having orientations DIR_CAM1, DIR_CAM2, ..., DIR_CAMN pointing away from the center point of the cube. Naturally, other shapes, e.g. the shape of a cuboctahedron, or other arrangement, even irregular ones, can be used.

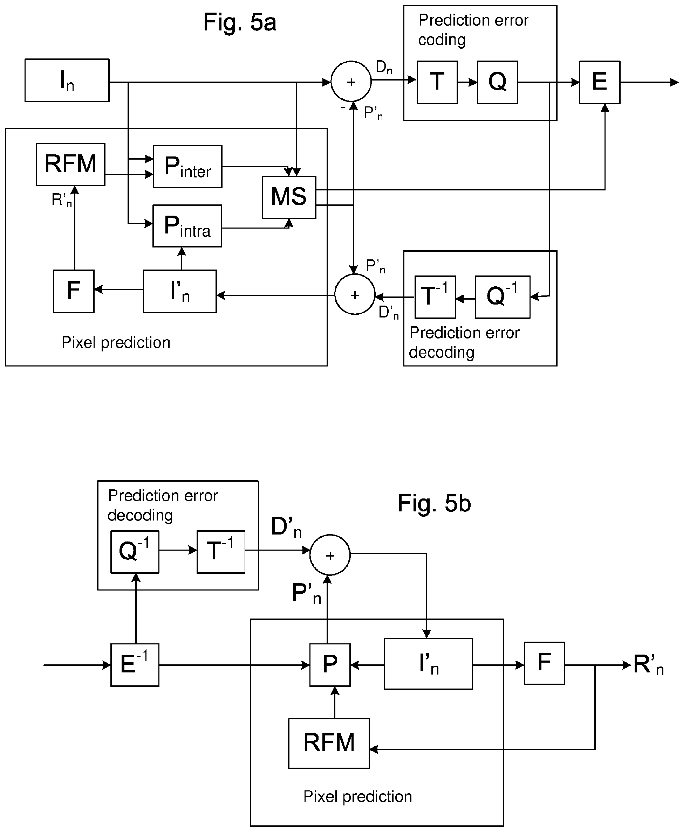

A video codec consists of an encoder that transforms an input video into a compressed representation suited for storage/transmission and a decoder that can uncompress the compressed video representation back into a viewable form. Typically encoder discards some information in the original video sequence in order to represent the video in a more compact form (that is, at lower bitrate). An example of an encoding process is illustrated in Figure 5a. Figure 5a illustrates an image to be encoded (Iⁿ); a predicted representation of an image block (P'ⁿ); a prediction error signal (Dⁿ); a reconstructed prediction error signal (D'ⁿ); a preliminary reconstructed image (I'ⁿ); a final reconstructed image (R'ⁿ); a transform (T) and inverse transform (T1); a quantization (Q) and inverse quantization (Q⁻¹); entropy encoding (E); a reference frame memory (RFM); inter prediction (P^{inter}); intra prediction (P^{intra}); mode selection (MS) and filtering (F). An example of a decoding process is illustrated in Figure 5b. Figure 5b illustrates a predicted representation of an image block (P'ⁿ); a reconstructed prediction error signal (D'ⁿ); a preliminary reconstructed image (I'ⁿ); a final reconstructed image (R'ⁿ); an inverse transform (T⁻¹); an inverse quantization (Q⁻¹); an entropy decoding (E⁻¹); a reference frame memory (RFM); a prediction (either inter or intra) (P); and filtering (F).

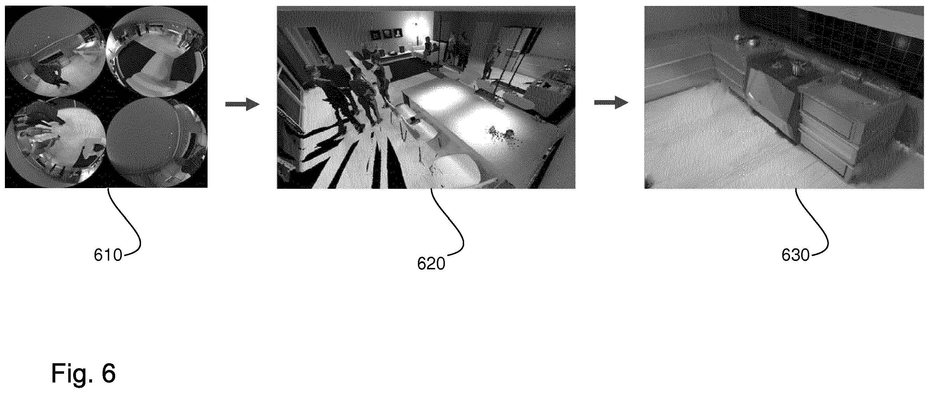

Figure 6 demonstrates an example of processing steps of manipulating volumetric video data, starting from raw camera frames (from various locations within the world) and ending with a frame rendered at a freely-selected 3D viewpoint. The starting point 610 is media content obtained from one or more camera devices. The media content may comprise raw camera frame images, depth maps, and camera 3D positions. The recorded media content, i.e. image data, is used to construct an animated 3D model 620 of the world. The viewer is then freely able to choose his/her position and orientation within the world when the volumetric video is being played back 630.

"A sparse voxel octree" (SVO) is a central data structure to which the present embodiments are based. "Voxel" of a three-dimensional world corresponds to a pixel of a two-dimensional world. Voxels exist in a 3D grid layout. An octree is a tree data structure used to partition a three-dimensional space. Octrees are the three-dimensional analog of quadtrees. A sparse voxel octree describes a volume of a space containing a set of solid voxels of varying sizes. Empty areas within the volume are absent from the tree, which is why it is called "sparse".

A volumetric video frame is a complete SVO that models the world at a specific point in time in a video sequence. Voxel attributes contain information like color, opacity, surface normal vectors, and surface material properties. These are referenced in the SVO (e.g. color of a solid voxel), and can be stored separately from the SVO.

The present embodiments relate to real-time computer graphics and virtual reality (VR). Volumetric video is to virtual reality what traditional video is to 2D/3D displays.

In computer graphics, term "mipmap" is used. Mipmaps are pre-calculated, optimized sequences of images, each of which is a progressively lower resolution representation of the same image. The height and width of each image, or level, in the mipmap is a power of two smaller than the previous level. They are intended to increase rendering speed and reduce aliasing artifacts. In the context of voxel octrees, each level in the octree can be considered a 3D mipmap of the next lower level.

When encoding a volumetric video, each frame may produce several hundred megabytes or several gigabytes of voxel data which needs to be converted to a format that can be streamed to the viewer, and rendered in real-time. The amount of data depends on the world complexity and the number of cameras. The larger impact comes in a multi-device recording setup with a number of separate locations where the cameras are recording. Such a setup produces more information than a camera at a single location.

In computer graphics, one use for voxel octrees is "raycasting". Raycasting can be used for determining which voxel a 3D ray collides with inside an entire voxel volume. This entails traversing all the octree nodes that intersect a given ray, until an intersecting solid voxel is discovered. The octree can be traversed either recursively or in a single loop. SVOs make this a more efficient operation because all empty spaces can be skipped.

Volumetric video is composed of large amounts of data. VR rendering has high frame rate and resolution requirements, so GPU (Graphic Processing Unit) hardware may be used. In such case the data has to be transferred from system memory to GPU memory before it can be rendered. However, large memory transfers hinder rendering performance - GPUs are optimized for data that stays unchanged in GPU memory as long as possible.

Perceived surface colors of volumetric video depend on both incident illumination and the viewing direction. This is particularly noticeable when looking at shiny and reflecting surfaces. In a captured VR scene, the incident illumination is constant, while the camera(s) record the perceived color for a small subset of all viewing directions.

The present embodiments are targeted to a solution for approximating realistic lighting and shading in a 3D reconstruction made from sparse multi-view captures of real-world scenes. This may be achieved by two parametric models that can be used to approximate i) the outgoing illumination and/or ii) the reflectance properties of each surface elements. In addition, the solution may be enhanced by associated methods for optimizing the parametric models based on captured image content.

The solution according to an embodiment comprises at least the following steps:
- building an SVO (Sparse Voxel Octree) model from the input images and depth maps;
- pre-processing the SVO model to smooth surfaces, to estimate normal vectors, and/or to segment similar regions;
- projecting input image colors to each voxel based on visibility, and converting the input images into directional radiance (outgoing illumination samples, i.e. VDDC (view-direction-dependent color) samples; and
- processing the radiance samples by performing one of the following: fitting the radiance samples to a parametric color model to generate estimated radiance samples for a current viewing direction; or analyzing the radiance samples with the content of the generated sparse voxel octree to separate an actual surface color from a reflected lighting.

The step for fitting the radiance samples to a parametric color model may comprise optimizing a multi-lobe radiance model for best fit to radiance samples in each voxel of the generated SVO. Similarly, the step for analyzing the radiance samples may comprise raycasting reflections per voxel in the generated SVO and optimizing a set of reflectance properties to best match the reflected colors over a region of similarly classified voxels.

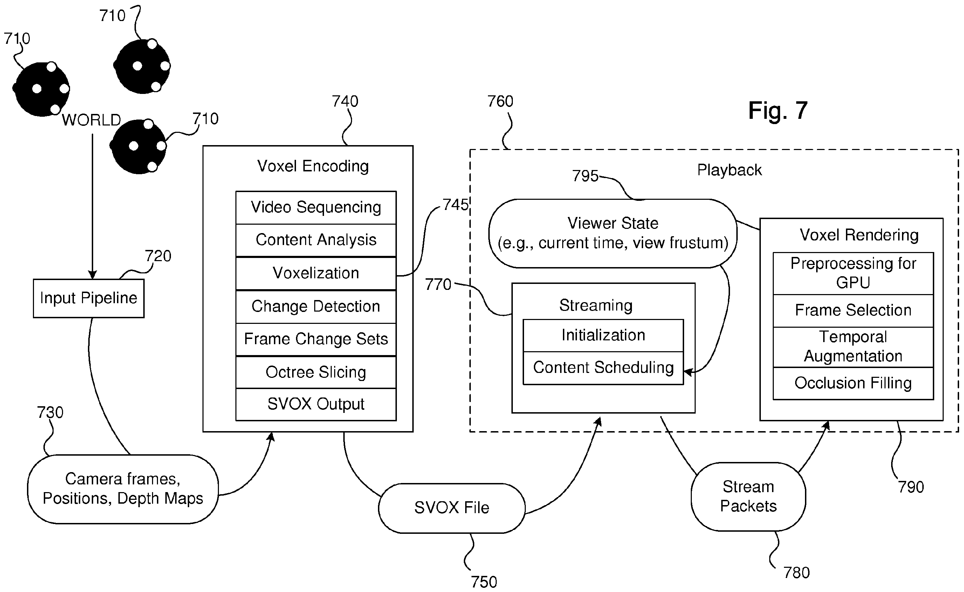

Figure 7 is an example of one possible implementation of a volumetric video pipeline. The present embodiments are targeted to a "Voxelization" stage 745 of the pipeline.

In the beginning of the process, multiple cameras 710 capture video data of the world, which video data is input 720 to the pipeline. The video data comprises camera frames, positions and depth maps 730 which are transmitted to the Voxel Encoding 740.

During the "Video Sequencing" stage of the Voxel Encoding 740, the input video material has been divided into shorter sequences of volumetric frames. A single volumetric reference frame may have been chosen for each sequence. The reference frame can be the first frame in the sequence, any one of the other frames in the sequences, or it may have been synthesized on one or more frames in the sequence.

The encoder has produced a sparse voxel octree for the sequence's volumetric reference frame, and the volumetric frame currently being encoded. At the "Change Detection" stage, the encoder is configured to process each frame in the sequence separately. Each frame may be compared against the one reference frame chosen for the sequence. The comparison results in a changed set, where some nodes of the tree may have been deleted, some nodes in the tree may have been added, and/or some nodes may have changed their content.

The outcome of the Voxel Encoding 740 is a SVOX (Sparse VOXel) file 750, which is transmitted for playback 760. The SVOX file 750 is streamed 770, which creates stream packets 780. For these stream packets 780 a voxel rendering 790 is applied which provides viewer state (e.g. current time, view frustum) 795 to the streaming 770.

It is to be noticed that the example shown in Figure 7 can be modified, e.g. by handling playback component via multiple 2D video and depth streams.

During the voxelization stage 745, the depth information and camera images from all available camera device and other sensing devices are combined into a volumetric representation of the scene. It is to be noticed that a single point in the scene, represented by a solid voxel in an SVO, may be seen by multiple cameras, since the multiple cameras view the scene points from different directions and distances.

At first, an SVO is build based on all available depth information, so that all geometrical details are fully present in the SVO. 3D coordinates of each solid voxel may be written to memory for later use. At the first stage, the quality of the voxelization can be improved by
- applying voxel thinning to refine surface irregularities arising from quantization errors in depth data;
- if it is noticed that the source data is unreliable, for example if the camera is relatively far from the voxel, the voxel's size may be increased to compensate for the inaccurate sampling; and
- estimating surface normal at the voxel's position and applying an offset to the voxel's origin pushing it into the surface so that its outer edge aligns as closely as possible with the original surface.

Next, all camera images are projected onto every solid voxel. 3D coordinates stored at the first phase may be used for the projection. A ray may be casted from the camera position to the voxel to see if there are occlusions, i.e., if the voxel is visible to the camera. The result is a set of radiance samples, i.e. view-direction-dependent color (VDDC) samples, for each voxel.

As a third phase, the VDDCs may be combined into a smaller representation so that, given a viewing direction, the renderer can reproduce the appearance of the voxel from that direction.

The resulted set of view-direction-dependent color (VDDC) samples may be processed according to a parametric color modeling, where the radiance samples are fitted to a parametric color model to generate estimated radiance samples for a current viewing direction. Alternatively, the resulted set of VDDC samples may be processed according to a dynamic reflection estimation, where the VDDC samples are analyzed with the content of the generated SVO to separate an actual surface color from a reflected lighting.

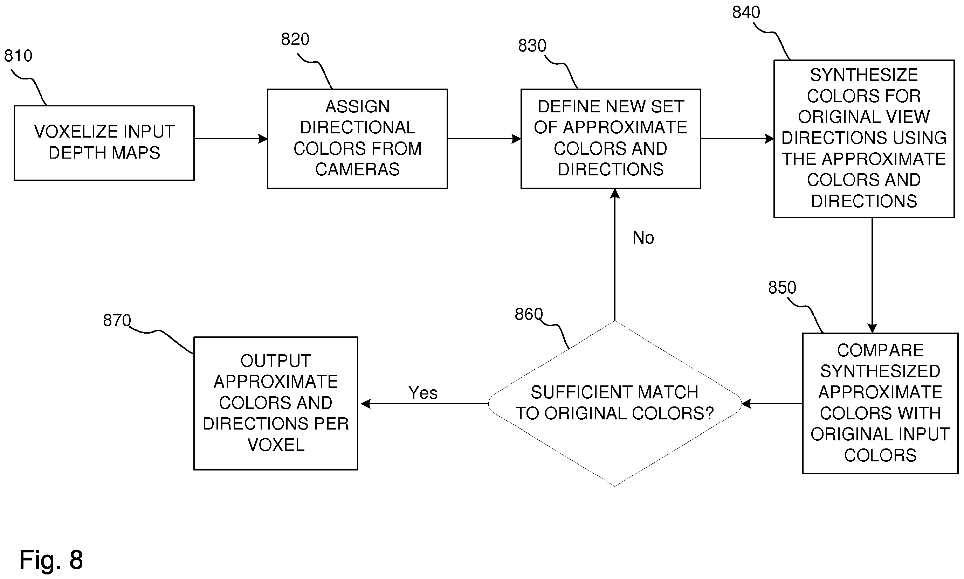

An embodiment for parametric color modeling is illustrated in Figure 8, where the VDDCs are processed by fitting them into a parametric model. This reduces the amount of data that needs to be stored in the SVO, and during rendering, the parametric model provides an estimated VDDC for the current viewing direction. The VDDCs may be stored as a set of N (N being a positive integer) colors and direction vectors, where the length of the direction vector (or a separate coefficient) indicates the angular extent of the corresponding color: 0 is 360°, 1.0 is a singular point. The rendered color is a weighted sum of these directional colors. In this embodiment, a set of colors and vectors may be found, said set of colors and vectors best approximating the set of recorded directional color samples. Then N may be adjusted according to a desired quality and size target. The advantage of this embodiment is simplicity, so it can be suitable for GPUs where processing power is limited. The estimation may not be very accurate if there are few VDDCs or they are all from the same general direction.

As shown in an embodiment of Figure 8, the processing steps may comprise voxelizing input depth maps 810; assigning directional colors from cameras 820; defining a new set of approximate colors and direction 830; synthesizing colors for original view direction using the approximate colors and directions 840; combining the synthesized approximate color with original input colors 850; if it is determined that there is sufficient match to original colors 860; the approximate colors and directions are output per voxel 870; if there is not sufficient match to original colors 860, a new set of approximate colors and directions are defined 830.

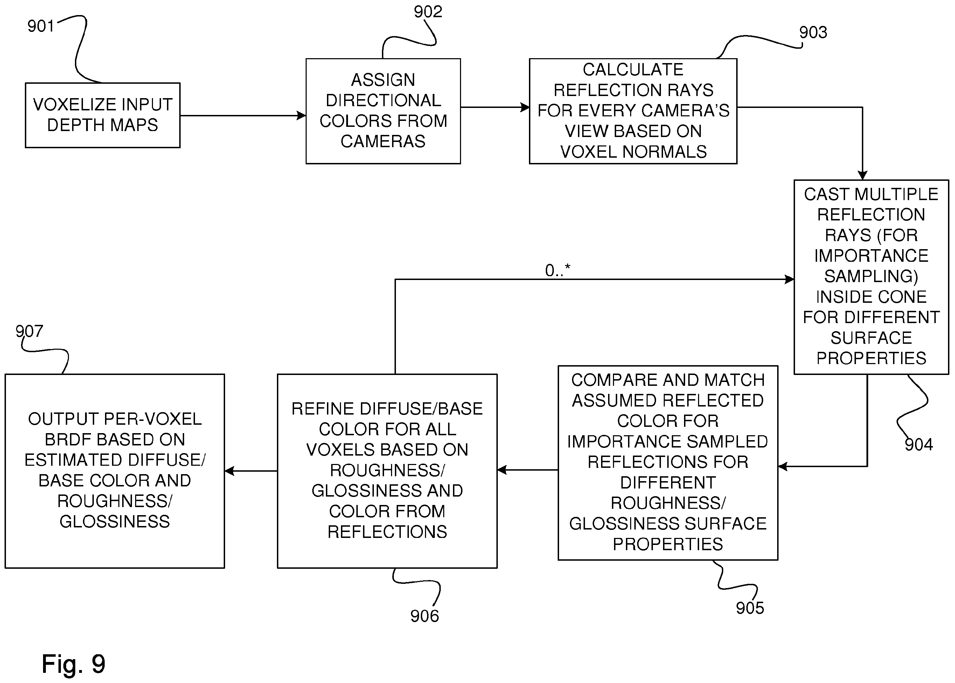

An embodiment for dynamic reflection estimation is illustrated in Figure 9, where VDDCs are analyzed together with the SVO contents to separate the actual surface color from any reflected lighting. The constructed SVO is a partial or complete 3D model of the scene, so it can be used for analyzing the environment around a voxel. Assuming accurate depth mapping, the surface normal for each voxel can be estimated. Additionally, 2D segmentation and material classification methods can be applied to the input images to detect larger similar regions, and these regions can be projected to the voxel domain to group together voxels that belong to a patch of similar material. By combining the material similarity and normal vectors, more information may be got on the same material under different illumination/view direction combinations, enhancing the accuracy of reflectivity estimation.

For the final output SVO it is sufficient to only store a single surface color and the estimated reflectivity parameters, so that the renderer can recreate the reflections dynamically by casting reflection rays within the SVO. The advantage of this technique is that reflective surfaces (including mirrors and less sharply reflecting materials) and specular highlights can be accurately reproduced for the viewer.

When the VDDCs of a voxel have been determined, it is checked whether the colors vary more than a predetermined threshold depending on the capture direction. Such threshold may be one of the encoder's quality parameters. If so, reflection rays/cones are casted in a window around the ideal reflection vector and it is determined if they collide within matching colors for most VDDCs. If so, the reflected color components are factored out to approximate the actual color of the surface, and it is estimated, how reflective the surface is. Roughness is another surface property that greatly affects how the reflection is perceived and what the actual reflection color is for a single voxel. With a rough surface, reflection color is affected by all the reflection colors within a wide cone whereas with a smooth surface, the reflection color seems to be coming from a single point. Roughness evaluation of the surface can be done with importance sampling, i.e. casting many rays within the cone area with different cone sizes.

A 360° scene captured with sufficient background information can also be used to estimate the direction of prominent light sources. These light sources can be cross-checked against surface highlights to determine the degree and direction of specularity for each voxel.

As shown in an embodiment of Figure 9, the processing steps may comprise voxelizing the input depth maps 901; assigning directional colors from cameras 902; calculating reflection rays for every camera's view based on voxel normals 903; casting multiple reflection rays inside cone for different surface properties 904; comparing and matching assumed reflected color for importance sampled reflections for different roughness/glossiness surface properties 905; refining diffuse/base color for all voxels based on roughness/glossiness and color from reflections 906; and outputting final color per voxel with BRDF (bidirectional reflectance distribution function) based on estimated diffuse/base color and roughness/glossiness 907.

According to an embodiment, additional pre-/post-processing steps can be applied to the previous embodiments to further enhance the operation. In the additional pre-/post-processing steps sampling artifacts can be avoided by detecting continuous surfaces (in the 2D camera images, or in the 3D SVO), and the specular components can be smoothed out between neighboring voxels. In addition, there are 2D image specular/diffuse-separating algorithms that can be used to estimate the specularity of different parts of the image. This can be applied as an additional factor in the reflectivity estimation, and when determining suitable parametric VDDCs. Further, similarity of neighboring voxels can be estimated by normalizing estimated parameters with respect to the normal vector and parameters between similar neighbors can be smoothed.

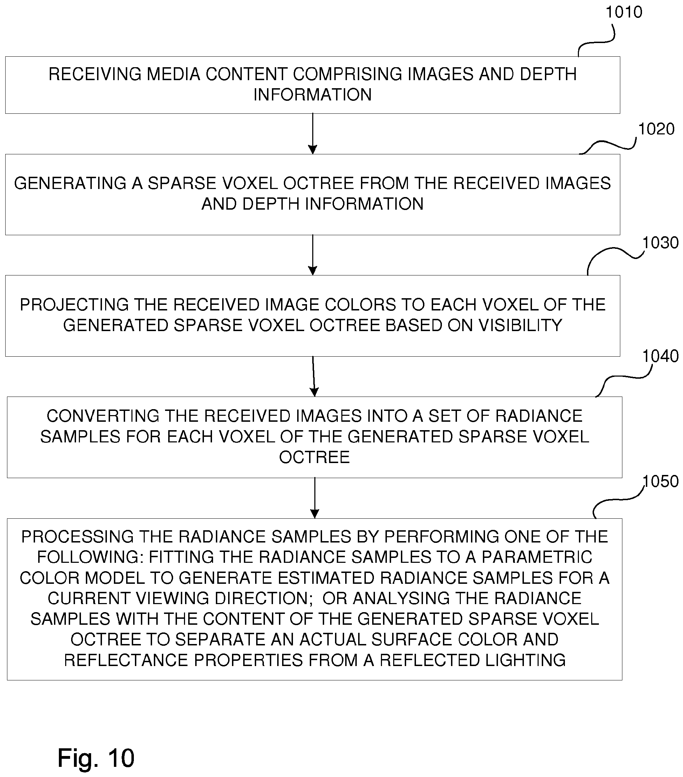

Figure 10 is a flowchart illustrating a method according to an embodiment. A method comprises
- receiving media content comprising images and depth information 1010;
- generating a sparse voxel octree from the received images and depth information 1020;
- projecting the received image colors to each voxel of the generated sparse voxel octree based on visibility 1030;
- resulting a set of radiance samples for each voxel of the generated sparse voxel octree 1040;
- processing the radiance samples by performing one of the following: fitting the radiance samples to a parametric color model to generate estimated radiance samples for a current viewing direction; or analyzing the radiance samples with the content of the generated sparse voxel octree to separate an actual surface color and reflectance properties from a reflected lighting 1050.

An apparatus according to an embodiment comprises means for receiving media content comprising images and depth information; generating a sparse voxel octree from the received images and depth information; projecting the received image colors to each voxel of the generated sparse voxel octree based on visibility; resulting a set of radiance samples for each voxel of the generated sparse voxel octree; and processing the radiance samples by performing one of the following: fitting the radiance samples to a parametric color model to generate estimated radiance samples for a current viewing direction; or analyzing the radiance samples with the content of the generated sparse voxel octree to separate an actual surface color and reflectance properties from a reflected lighting. The means comprises a processor, a memory, and a computer program code residing in the memory.

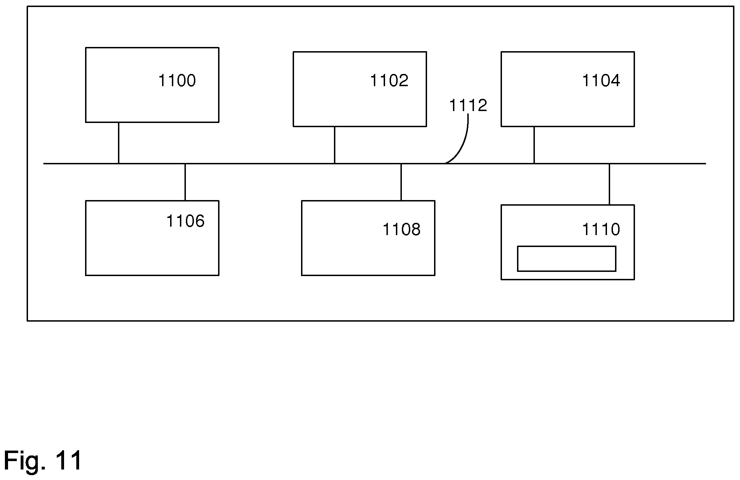

Figure 11 shows a computer graphics system suitable to be used in image processing according to an embodiment. The generalized structure of the computer graphics system will be explained in accordance with the functional blocks of the system. Several functionalities can be carried out with a single physical device, e.g. all calculation procedures can be performed in a single processor if desired. A data processing system of an apparatus according to an example of Fig. 11 comprises a main processing unit 1100, a memory 1102, a storage device 1104, an input device 1106, an output device 1108, and a graphics subsystem 1110, which are all connected to each other via a data bus 1112.

The main processing unit 1100 is a conventional processing unit arranged to process data within the data processing system. The memory 1102, the storage device 1104, the input device 106, and the output device 1108 are conventional components as recognized by those skilled in the art. The memory 1102 and storage device 1104 store data within the data processing system 1100. Computer program code resides in the memory 1102 for implementing, for example, computer vision process. The input device 1106 inputs data into the system while the output device 1108 receives data from the data processing system and forwards the data, for example to a display.

The data bus 1112 is a conventional data bus and while shown as a single line it may be any combination of the following: a processor bus, a PCI bus, a graphical bus, an ISA bus. Accordingly, a skilled person readily recognizes that the apparatus may be any conventional data processing device, such as a computer device, a personal computer, a server computer, a mobile phone, a smart phone or an Internet access device, for example Internet tablet computer.

The various embodiments may provide advantages. The solution can be applied to any 3D/VR footage where depth information and camera positions are available. In the real world, all surfaces have some level of specular reflectance. If this is not accounted for when rendering a VR scene, the end result appears dull and lifeless. Highly reflective surfaces are particularly challenging because the viewer will easily notice visual artifacts if they look wrong. The present embodiments help with these problems by estimating and recreating surface reflections in a plausible manner.

Fully metallic surfaces don't have a diffuse color, which makes metals and their reflection components more difficult to detect. Correctly processing such surfaces may require additional pre-processing steps to identify the material type of the surface.

When the appearance of a voxel can be reproduced from any viewing direction, it enables the viewer to move more freely within the virtual world without encountering distracting visual artifacts.

An SVO is a simple tree structure, which makes resolution adjustments and spatial subdivision trivial: resolution can be changed simply by limiting the depth of the tree, and subdivision can be done by picking specific subtrees. This makes the data structure well-suited for parallelized encoding and adaptive streaming. SVOs also have the advantage of supporting variable resolution within the volume. It is also trivial to merge SVOs together so that each SVO contributes details to a combined SVO. This is especially useful when merging the captured contents of multiple 3D cameras. There are also techniques for reducing the total size of the SVO by sharing subtrees between nodes (SVO directed acyclic graph (DAG)).

One of the advantages of SVOs over triangle meshes is that Level-Of-Detail reductions can be achieved trivially by mipmapping the SVO. This is important in 3D graphics because objects in the distance should be rendered using a lower level of detail to avoid wasting processing time.

The various embodiments of the invention can be implemented with the help of computer program code that resides in a memory and causes the relevant apparatuses to carry out the invention. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

## Claims

1. A method, comprising:
- receiving media content comprising images and depth information;
- generating a sparse voxel octree from the received images and the depth information;
- projecting the received image colors to each voxel of the generated sparse voxel octree based on visibility;
- converting the received images into a set of radiance samples for each voxel of the generated sparse voxel octree;
- processing the radiance samples by performing one of the following: fitting the radiance samples to a parametric color model to generate estimated radiance samples for a current viewing direction; or analyzing the radiance samples with content of the generated sparse voxel octree to separate an actual surface color and reflectance properties from a reflected lighting.

2. The method according to claim 1, further comprising receiving the media content from a multicamera device.

3. The method according to claim 1 or 2, further comprising combining the radiance samples into a smaller representation to enable reproduction of an appearance of the voxel from a viewing direction.

4. The method according to claim 1 or 2 or 3, wherein the fitting the radiance samples to a parametric color model comprises optimizing a multi-lobe radiance model for best fit to radiance samples in each voxel of the generated sparse voxel tree.

5. The method according to claim 1 or 2 or 3, wherein the analyzing the radiance samples comprises raycasting reflections per voxel in the generated sparse voxel octree and optimizing a set of reflectance properties to best match reflected colors over a region of similarly classified voxels.

6. An apparatus comprising at least one processor, memory including computer program code, the memory and the computer program code configured to, with the at least one processor, cause the apparatus to perform at least the following:
- receive media content comprising images and depth information;
- generate a sparse voxel octree from the received images and the depth information;
- project the received image colors to each voxel of the generated sparse voxel octree based on visibility;
- result a set of radiance samples for each voxel of the generated sparse voxel octree;
- process the radiance samples by performing one of the following: fit the radiance samples to a parametric color model to generate estimated radiance samples for a current viewing direction; or analyze the radiance samples with the content of the generated sparse voxel octree to separate an actual surface color and reflectance properties from a reflected lighting.

7. The apparatus according to claim 6, further comprising receiving the media content from a multicamera device.

8. The apparatus according to claim 6 or 7, further comprising combining the radiance samples into a smaller representation to enable reproduction of an appearance of the voxel from a viewing direction.

9. The apparatus according to claim 6 or 7 or 8, wherein the fitting the radiance samples to a parametric color model comprises optimizing a multi-lobe radiance model for best fit to radiance samples in each voxel of the generated sparse voxel tree.

10. The apparatus according to claim 6 or 7 or 8, wherein the analyzing the radiance samples comprises raycasting reflections per voxel in the generated sparse voxel octree and optimizing a set of reflectance properties to best match the reflected colors over a region of similarly classified voxels.

11. A computer program product embodied on a non-transitory computer readable medium, comprising computer program code configured to, when executed on at least one processor, cause an apparatus or a system to:
- receive media content comprising images and depth information;
- generate a sparse voxel octree from the received images and the depth information;
- project the received image colors to each voxel of the generated sparse voxel octree based on visibility;
- result a set of radiance samples for each voxel of the generated sparse voxel octree;
- process the radiance samples by performing one of the following: fit the radiance samples to a parametric color model to generate estimated radiance samples for a current viewing direction; or analyze the radiance samples with content of the generated sparse voxel octree to separate an actual surface color and reflectance properties from a reflected lighting.
